# EUROPÄISCHE PATENTANMELDUNG

(11) **EP 2 267 875 A2**
(43) Veröffentlichungstag der Anmeldung: **29.12.2010**
(21) Anmeldenummer: 10165562.9
(22) Anmeldetag: 10.06.2010
(51) Int. Cl.: H02M 1/12

(54) **Netzfilter und Verwendung eines Netzfilters**

(30) Priorität: 22.06.2009 DE 102009029843
(71) Anmelder: Fujitsu Technology Solutions Intellectual Property GmbH, 80807 München (DE)
(72) Erfinder: Busch, Peter, 86179, Augsburg (DE)
(74) Vertreter: Epping - Hermann - Fischer

(57) **Zusammenfassung**

Die Erfindung betrifft ein Netzfilter (1) mit wenigstens einem zwischen zwei Versorgungsleitungen (Ph, N) geschalteten X-Kondensator (CX) und wenigstens einem Entladewiderstand (RX) zum Entladen des X-Kondensators (CX). Das Netzfilter (1) ist **dadurch gekennzeichnet, dass** der Entladewiderstand (RX) in Reihe mit wenigstens einem Schaltelement (Q1, Q2) angeordnet ist und das Netzfilter (1) wenigstens eine Detektorschaltung (2) zum Erkennen einer Netztrennung umfasst, die dazu eingerichtet ist, beim Erkennen einer Netztrennung das Schaltelement (Q1, Q2) zum Entladen des X-Kondensators (CX) über den Entladewiderstand (RX) zu schließen.

Die Erfindung betrifft des Weiteren die Verwendung eines derartigen Netzfilters (1) in einem Netzteil (5).

## Beschreibung

Die Erfindung betrifft ein Netzfilter mit wenigstens einem zwischen zwei Versorgungsleitungen geschalteten X-Kondensator und wenigstens einem Entladewiderstand zum Entladen des X-Kondensators. Darüber hinaus betrifft die Erfindung die Verwendung eines solchen Netzfilters.

Netzfilter mit so genannten X-Kondensatoren, die zwischen zwei Versorgungsleitungen eines Stromversorgungsnetzes, beispielsweise zwischen einem Phasenleiter und einem Neutralleiter oder zwischen zwei Phasenleitern, geschaltet sind, sind vielfach bekannt. Sie dienen dazu, Gegentaktstörspannungen, also Störspannungen zwischen den Zuleitungen wie sie von elektrischen Verbrauchern verursacht werden, zu dämpfen.

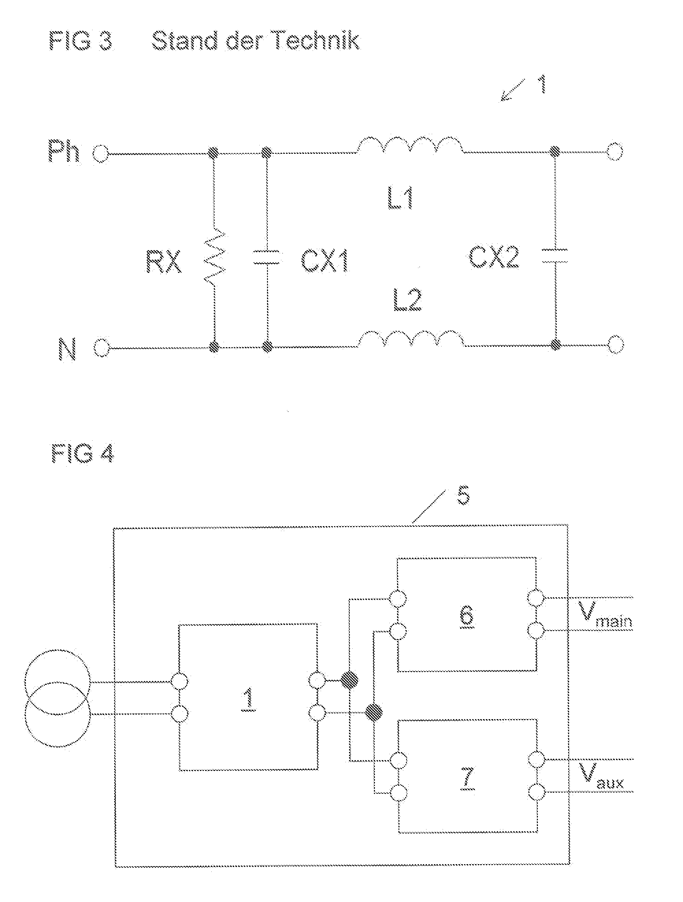

Figur 3 zeigt ein beispielhaftes Netzfilter 1 gemäß dem Stand der Technik. Zwischen einem Phasenleiter Ph und einem Neutralleiter N sind zwei X-Kondensatoren CX1 und CX2 sowie ein Entladewiderstand RX angeordnet. Darüber hinaus umfasst das Netzfilter 1 zwei Drosselspulen L1 und L2 im Phasenleiter Ph beziehungsweise der Neutralleiter N.

Die Drosselspulen L1 und L2 dämpfen Gleichtaktstörströme, also Störströme, die in gleicher Phase auf dem Phasenleiter Ph und dem Neutralleiter N gegenüber dem Erdpotential auftreten. Des weiteren können zur Unterdrückung von Gleichtaktstörspannungen weitere Kondensatoren, genannt Y-Kondensatoren, zwischen dem Phasenleiter Ph beziehungsweise dem Neutralleiter N und einem Erdleiter angeordnet werden. Diese sind in der Figur 3 jedoch nicht dargestellt.

Der X-Kondensator CX1 ist netzseitig vor den zwei Drosselspulen L1 und L2 des Phasenleiters Ph beziehungsweise des Neutralleiters N angeordnet. Der X-Kondensator CX2 ist hinter den Drosselspulen L1 und L2 angeordnet. Die X-Kondensatoren CX1 und CX2 dienen dazu, von einem am Ausgang des Filters auf der rechten Seite angeordneten Verbraucher verursachte Gegentaktstörungen zu dämpfen, um eine Beeinflussung der Netzspannung soweit wie möglich zu verhindern.

Insbesondere bei Computer-Schaltnetzteilen, die eine verhältnismäßig hohe Leistung von in der Regel über 100 W besitzen, müssen die X-Kondensatoren verhältnismäßig groß dimensioniert werden. Wird das Netzfilter 1 vom Stromversorgungsnetz getrennt, verbleibt in den X-Kondensatoren eine verhältnismäßig große Ladung mit einer Spannung, die der Netzspannung im Zeitpunkt der Unterbrechung entspricht. Diese Restladung kann bei Berührung etwa eines Netzsteckers zu gefährlichen Stromstößen führen.

Um dies zu verhindern, ist zwischen dem Phasenleiter Ph und dem Neutralleiter N der Entladewiderstand RX geschaltet, der die X-Kondensatoren CX1 und CX2 beim Unterbrechen der Netzverbindung innerhalb einer definierten kurzen Zeitspanne entlädt. Gemäß einschlägiger Vorschriften, beispielsweise der VDE-Norm "Einrichtungen der Informationstechnik - Sicherheit" DIN EN 60950-1, muss eine Entladung innerhalb einer Zeit von weniger als einer Sekunde auf weniger als 37 % des Startwertes stattfinden. Alternativ muss die Gesamtkapazität aller X-Kondensatoren auf einen Wert von maximal 100 nF begrenzt werden.

Ein Problem der oben beschriebenen Schaltung besteht darin, dass der zwischen Phasenleiter Ph und Neutralleiter N geschaltete Entladewiderstand RX sowohl im Betrieb eines hinter dem Netzfilter angeordneten elektrischen Gerätes als auch in einem so genannten Standby-Zustand, in dem das elektrische Gerät nur mit einer Hilfsspannung versorgt wird, zu einer Verlustleistung führt. Bei einer Dimensionierung des Netzfilters für ein Schaltnetzteil eines Computersystems mit etwa 200 W entsteht durch einen Entladewiderstand RX von 500 kΩ beispielsweise eine Verlustleistung von etwa 100 mW. Befindet sich das Computersystem in einem Standbyzustand mit einer Leistungsaufnahme von beispielsweise 5 W, macht die Verlustleistung bereits 2 % der Gesamtleistung aus.

Aufgabe der vorliegenden Erfindung ist es, eine Verlustleistung eines Netzfilters sowohl im eingeschalteten als auch im so genannten Standby-Betrieb eines mit dem Netzfilter gekoppelten elektronischen Gerätes zu reduzieren. Dabei soll die elektrische Sicherheit insbesondere beim Ziehen einer Netzleitung des elektronischen Gerätes gewahrt bleiben.

Die Aufgabe wird erfindungsgemäß durch ein gattungsgemäßes Netzfilter gelöst, dass dadurch gekennzeichnet ist, dass der Entladewiderstand in Reihe mit wenigstens einem Schaltelement angeordnet ist und das Netzfilter wenigstens eine Detektorschaltung zum Erkennen einer Netztrennung umfasst, die dazu eingerichtet ist, beim Erkennen einer Netztrennung das Schaltelement zum Entladen des X-Kondensators über den Entladewiderstand zu schließen.

Durch das in Reihe mit dem Entladewiderstand angeordnete Schaltelement wird der Entladewiderstand im normalen Betrieb des Netzfilters, also wenn das Netzfilter mit einem Stromversorgungsnetz verbunden ist, von den Versorgungsleitungen getrennt. Die zusätzliche Detektorschaltung sorgt dafür, dass beim Erkennen einer Netztrennung der X-Kondensator über den Entladewiderstand sicher entladen wird, sodass nach dem Trennen des Netzfilters keine gefährliche Ladung in dem X-Kondensator verbleibt.

Gemäß einer vorteilhaften Ausgestaltung umfasst die Detektorschaltung im Wesentlichen ein Tiefpassfilter zur Erkennung einer Wechselspannung eines Stromversorgungsnetzes. Tiefpassfilter können verhältnismäßig einfach aufgebaut werden und gestatten eine einfache und sichere Erkennung einer Netzwechselspannung.

Gemäß einer vorteilhaften Ausgestaltung umfasst das Tiefpassfilter einen Spannungsteiler mit wenigstens einem Widerstand und wenigstens einem mit dem Widerstand in Reihe geschalteten Kondensator, wobei ein Spannungspotential zwischen dem Widerstand und dem Kondensator beim Anliegen der Wechselspannung des Stromversorgungsnetzwerkes an den zwei Versorgungsleitungen unterhalb eines vorbestimmten Spannungspotentials verbleibt und beim Trennen des Netzfilters von dem Versorgungsnetz über das vorbestimmte Spannungspotential ansteigt. Eine derartige Schaltungsanordnung umfasst lediglich zwei passive Bauteile und erlaubt eine sichere Erkennung einer Trennung des Netzfilters von dem Stromversorgungsnetzwerk.

Gemäß einer weiteren vorteilhaften Ausgestaltung ist das wenigstens eine Schaltelement als Halbleiterschaltelement mit mindestens einem Steuereingang, insbesondere als MOSFET, ausgebildet, wobei die Detektorschaltung mit dem Steuereingang verbunden ist. Durch Verwendung eines Halbleiterschaltelementes, insbesondere eines MOSFET, kann eine einfache, spannungsgesteuerte Entladeschaltung für das Netzfilter verwirklicht werden.

Gemäß einer weiteren vorteilhaften Ausgestaltung umfasst das Netzfilter ein erstes Schaltelement und ein zweites Schaltelement, wobei die Detektorschaltung dazu eingerichtet ist, bei Erkennung einer Netztrennung im Verlauf einer positiven Halbwelle einer Netzspannung das erste Schaltelement und bei Erkennen einer Netztrennung im Verlauf einer negativen Halbwelle einer Netzspannung das zweite Schaltelement zu schließen. Durch Verwendung unterschiedlicher Schaltelemente zum Entladen des X-Kondensators bei Trennung während einer positiven beziehungsweise negativen Halbwelle kann der Schaltungsaufbau weiter vereinfacht werden. Insbesondere kann auf eine Gleichrichtung der durch einen Spannungsteiler erfassten Spannung verzichtet werden.

Das oben genannte Netzfilter eignet sich insbesondere zur Verwendung in einem Netzteil zur Versorgung eines elektronischen Geräts mit wenigstens einem ersten Schaltwandler. Vorteilhafterweise kann das Netzfilter in einem Netzteil mit wenigstens einem ersten Schaltwandler zur Versorgung des elektronischen Geräts in einem eingeschalteten Zustand und einem zweiten Schaltwandler zur Versorgung des elektronischen Gerätes in einem Bereitschaftszustand verwendet werden, wobei der erste und der zweite Schaltwandler gemeinsam an das Netzfilter angeschlossen sind.

Vorteilhafterweise wird das Netzfilter derart dimensioniert, dass es zur Dämpfung der von dem ersten Schaltwandler zur Versorgung des elektronischen Gerätes in einem eingeschalteten Zustand verursachten Netzstörungen ausreicht und zugleich im Bereitschaftszustand bei der Versorgung des elektronischen Gerätes über den zweiten Schaltwandler keine unnötig große Verlustleistung erzeugt.

Weitere vorteilhafte Ausgestaltungen sind in den abhängigen Patentansprüchen sowie in der nachfolgenden ausführlichen Beschreibung von Ausführungsbeispielen näher erläutert.

Die Erfindung wird anhand zweier Ausführungsbeispiele unter Bezugnahme auf Figuren näher erläutert. In den Figuren zeigen:
- Figur 1: einen Schaltplan eines Netzfilters gemäß einer ersten Ausgestaltung der Erfindung,
- Figur 2: einen Schaltplan eines Netzfilters gemäß einer zweiten Ausgestaltung der Erfindung
- Figur 3: einen Schaltplan eines Netzfilters gemäß dem Stand der Technik und
- Figur 4: eine schamtische Darstellung einer Verwendung des Netzfilters in einem Netzteil.

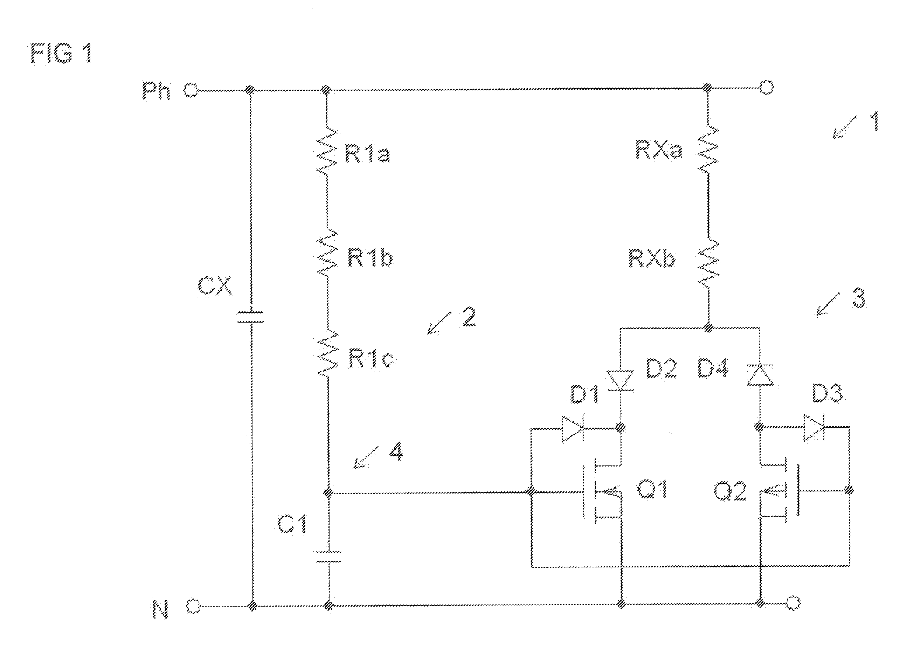

Figur 1 zeigt ein Netzfilter 1 mit einer Detektorschaltung 2 und einer Entladeschaltung 3. Des Weiteren umfasst das Netzfilter 1 einen X-Kondensator CX. Im Ausführungsbeispiel ist nur ein einziger, primärseitig angeordneter X-Kondensator CX dargestellt. Selbstverständlich kann das Netzfilter 1 noch weitere Kondensatoren oder Drosseln zum Filtern von Spannungs- oder Stromstörungen umfassen. Diese sind der Einfachheit halber in der Figur 1 jedoch nicht dargestellt.

Die Detektorschaltung 2 erkennt eine primärseitige Unterbrechung eines Phasenleiters Ph oder eines Neutralleiters N daran, dass in diesem Fall keine Wechselspannung, sondern nur noch eine positive oder negative Gleichspannung des X-Kondensators zwischen den Versorgungsleitungen Ph und N anliegt. Beispielsweise verbleibt beim Herausziehen eines Netzsteckers in dem primärseitigen X-Kondensator CX eine positive oder eine negative Spannung.

Die Detektorschaltung 2 umfasst im dargestellten Ausführungsbeispiel im Wesentlichen einen als Tiefpassfilter wirkenden Spannungsteiler. Der Spannungsteiler umfasst einen Widerstand R1 sowie einen Kondensator C1. Im Ausführungsbeispiel wird der Widerstand R1 durch eine Mehrzahl von in Reihe geschalteten Teilwiderständen R1a bis R1c gebildet.

Die Entladeschaltung 3 umfasst einen Entladewiderstand RX, der im Ausführungsbeispiel wiederum aus mehreren Teilwiderständen RXa und RXb besteht, sowie zwei zueinander parallel und mit dem Entladewiderstand RX in Reihe angeordnete Schaltelemente Q1 und Q2. Bei dem Schaltelement Q1 handelt es sich um einen selbstsperrenden n-Kanal MOSFET, bei dem Schaltelement Q2 handelt es sich um einen selbstsperrenden p-Kanal MOSFET. Um einen Stromfluss in Sperrrichtung über die Körperdioden der MOSFETs Q1 und Q2 zu vermeiden, sind die MOSFETs Q1 und Q2 jeweils in Reihe mit einer Diode D2 beziehungsweise D4 geschaltet, die gegenüber den Körperdiode der MOSFETs Q1 und Q2 verpolt angeordnet sind. Darüber hinaus sind zwei Dioden D1 und D3 zwischen den Drainanschlüssen sowie den Gateanschlüssen der MOSEFTs Q1 beziehungsweise Q2 vorgesehen, um ein Ansteigen der Gatespannung wesentlich über einer Einschaltschwelle der MOSFETs Q1 beziehungsweise Q2 zu verhindern.

Der Gesamtwiderstandswert des Widerstandes R1 ist derart groß gewählt, dass im Betrieb des Netzfilters ein Großteil der Netzspannung an dem Widerstand R1 abfällt. Beispielsweise weist er einen Gesamtwiderstandswert von etwa 100 M2 auf. Demgegenüber ist die Kapazität des Kondensators C1 verhältnismäßig klein gewählt, beispielsweise eine Kapazität von 100 nF, sodass durch Laden und Entladen des Kondensators C1 keine nennenswerte Blindleistung verursacht wird und in dem Kondensator C1 auch keine gefährliche Ladung beim Trennen des Netzfilters von dem Stromversorgungsnetz verbleibt.

Die genaue Dimensionierung des Widerstandes R1 sowie des Kondensators C1 wird in Abhängigkeit der bestimmungsgemäßen Netzfrequenz und der verwendeten Netzspannung so gewählt, dass an einem Knoten 4 zwischen dem Widerstand R1 und dem Kondensator C1 im Betrieb eine Spannung anliegt, die unter einer vorbestimmten Einschaltschwelle eines damit verbundenen Schaltelementes, beispielsweise einer Gatespannung der MOSFETs Q1 und Q2 von etwa 2 V, liegt. Im Betrieb des Netzfilters bleibt die Spannung am Knoten 4 stets unter dieser Einschaltschwelle, weil die Netzspannung fortwährend von positiver zu negativer Polarität und wieder zurück wechselt, sodass der Kondensator C1 abwechselnd mit einer positiven und einer negativen Spannung geladen wird, wobei der Widerstand R1 ein schnelles Ansteigen der Kondensatorspannung verhindert.

Wird nun eine Netzverbindung getrennt, so bleibt der X-Kondensator CX geladen mit der Momentanspannung, die beim Trennen zwischen den Versorgungsleitungen Ph und N anlag. Diese Spannung am X-Kondensator CX lädt den Kondensator C1 über den Widerstand R1 in einer verhältnismäßig kurzen Zeit, beispielsweise einer Zeitspanne von 300 ms, auf eine Spannung oberhalb der Einschaltschwelle eines mit dem Knoten 4 verbundenen Schaltelementes.

Im Fall einer positiven Spannung am X-Kondensator CX bei einer Netztrennung wird der Kondensator C1 über den Widerstand R1 auf eine positive Spannung aufgeladen und schaltet den n-Kanal MOSFET Q1 leitend. Über den Drainanschluss des MOSFET Q1, die Diode D2 und den Entladewiderstand RX wird der X-Kondensator CX entladen. Der Entladewiderstand RX ist dabei so dimensioniert, dass er innerhalb einer verbleibenden Zeit, beispielsweise innerhalb von nach der Erkennung noch verbleibenden Zeit von 700 ms bis zu einer vollen Sekunde, den Kondensator CX deutlich unter eine Schwelle von 37 % der Startspannung entlädt. Beispielweise weist der Entladewiderstand RX einen Gesamtwiderstandswert von 250 kΩ auf. Dabei verhindert die Diode D1 ein weiteres Aufladen des Kondensators C1 deutlich über die positive Einschaltschwelle des MOSFET Q1 hinaus. Dies ermöglicht den Einsatz eines Niederspannungskondensators als Kondensator C1.

Im Fall einer negativen Versorgungsspannung an dem X-Kondensator CX beim Trennen der Versorgungsleitung wird der p-Kanal MOSFET Q2 durch die negative Spannung am Knoten 4 leitend geschaltet. Über den Drainanschluss des MOSFET Q2, die Diode D4 und den Entladewiderstand RX wird der Kondensator CX wiederum entladen. Hierbei verhindert die Diode D3 ein weiteres Aufladen des Kondensators C1 deutlich unter die negative Einschaltschwelle des MOSFET Q2 hinaus.

Da der Kondensator C1 im Laufe einer positiven beziehungsweise negativen Halbwelle der Netzversorgungsspannung sowohl in positiver als auch negativer Richtung geladen wird, muss er als nicht gepolter Kondensator ausgeführt sein. Aufgrund der verhältnismäßig geringen Kapazität und Maximalspannung des Kondensators C1 eignet sich hierfür ein kostengünstiger Keramikkondensator.

Die Sicherheit der in der Figur 1 dargestellten Schaltung kann durch unterschiedliche, optionale Maßnahmen verbessert werden, um eine Funktion des Netzfilters 1, der Detektorschaltung 2 und der Entladeschaltung 3 auch im Falle einer Zerstörung einer der verwendeten Komponenten sicherzustellen.

Beispielsweise können zwei in Gegenrichtung in Serie geschaltete Zenerdioden mit einer Sperrspannung von etwa 18 V parallel zu dem Kondensator C1 geschaltet werden. Entsteht eine Unterbrechung zwischen den Gate- und Drainanschlüssen der MOSFETs Q1 oder Q2 durch die Zerstörung einer der Dioden D1 beziehungsweise D3, wird eine Überspannung zwischen dem Knoten 4 und dem Neutralleiter N über die Zenerdioden abgeführt, sodass eine Überspannung an dem Kondensator C1 und den Gateanschlüssen der MOSFETs Q1 beziehungsweise Q2 vermieden wird.

Alternativ oder zusätzlich können anstelle der einzelnen Dioden D1 und D3 jeweils zwei parallele Dioden D1a und D1b beziehungsweise D3a und D3b geschaltet werden, wobei diese Schaltung den Vorteil aufweist, dass anders als bei der Verwendung von Zenerdioden kein Leckstrom im Betrieb fließt.

Des Weiteren kann der Kondensator C1 des Tiefpassfilters in einer Reihenschaltung bestehend aus einem ersten Kondensator C1a und einem zweiten Kondensator C1b aufgeteilt werden. Bei Kurzschluss eines der beiden Kondensatoren funktioniert die Schaltung nach wie vor weiter, wobei sich lediglich die Zeitkonstante des Tiefpassfilters verändert.

Die in der Figur 1 dargestellte und oben beschriebene Schaltung senkt die Leistungsaufnahme des Netzfilters 1 im Ruhebetrieb auf etwa 0,5 mW gegenüber einer Leistungsaufnahme von etwa 100 mW der bekannten Schaltung gemäß Figur 3, also um den Faktor 200. Somit kann eine erhebliche Verbesserung des Wirkungsgrades insbesondere im Bereitschaftszustand eines elektronischen Gerätes erzielt werden.

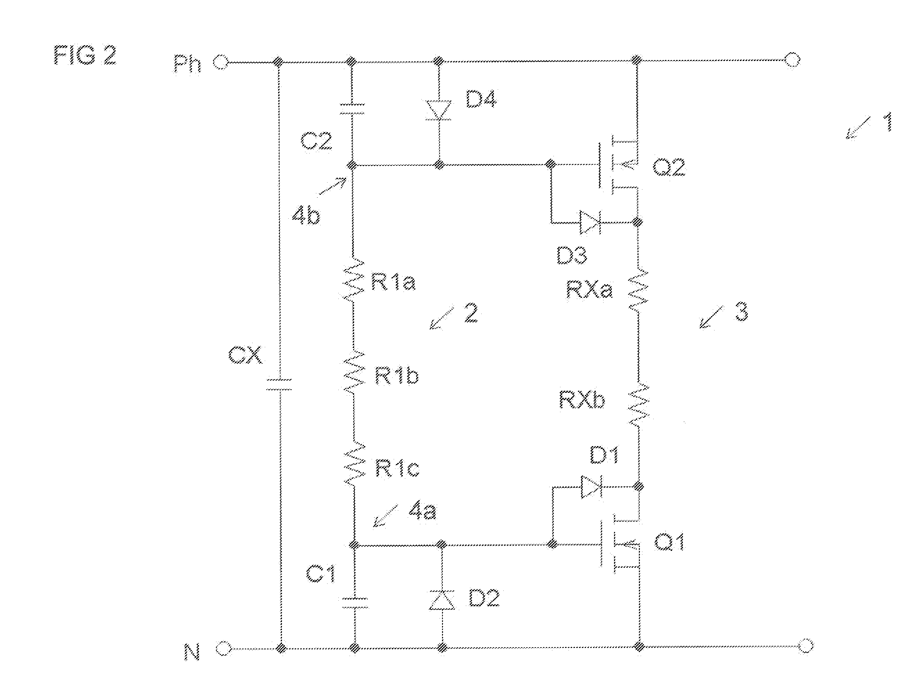

Figur 2 zeigt ein zweites Ausführungsbeispiel eines erfindungsgemäßen Netzfilters 1. Auch das Netzfilter 1 gemäß dem zweiten Ausführungsbeispiel umfasst einen zwischen einer Phasenleitung Ph und einem Neutralleiter N geschalteten X-Kondensator CX. Darüber hinaus umfasst das Netzfilter 1 eine Detektorschaltung 2 und eine Entladeschaltung 3.

Die Detektorschaltung 2 umfasst ein als Spannungsteiler ausgebildeten Tiefpassfilter. Anders als der Spannungsteiler gemäß dem ersten Ausführungsbeispiel ist gemäß dem zweiten Ausführungsbeispiel ein erster Kondensator C1 und ein zweiter Kondensator C2 symmetrisch jeweils vor beziehungsweise hinter einem Widerstand R1 angeordnet. Im Betrieb des Netzfilters 1 fällt ein Großteil der Netzspannung an dem Widerstand R1 ab, der beispielsweise wieder einen Widerstand von 100 MΩ aufweist. Ein verhältnismäßig kleiner Teil einer positiven beziehungsweise negativen Halbwelle der Netzspannung fällt dagegen an dem Kondensatoren C1 oder C2 ab, wobei der jeweils andere Kondensator C2 beziehungsweise C1 über die Dioden D4 beziehungsweise D2 überbrückt wird.

Die Entladeschaltung 3 ist ebenfalls symmetrisch aufgebaut. Sie umfasst neben einem Entladewiderstand RX, der im Ausführungsbeispiel durch zwei in Serie geschaltete Widerstände RXa und RXb ausgeführt ist, zwei damit ebenfalls in Serie geschaltete selbstsperrende n-Kanal MOSFETs Q1 und Q2. Die MOSFETs Q1 und Q2 sind so angeordnet, dass ihr Drainanschluss jeweils in Richtung des zentralen Entladewiderstandes RX ausgerichtet ist. Die MOSFETs Q1 und Q2 weisen jeweils eine Körperdiode auf, die einen Stromfluss vom Sourceanschluss zum Drainanschluss des MOSFET Q1 beziehungsweise Q2 auch bei abgeschalteter Steuerspannung an ihren jeweiligen Gateanschlüssen ermöglicht. Da die beiden MOSFETs jedoch gegenpolig angeordnet sind, fließt über den Entladewiderstand RX ohne Anliegen einer Gatespannung an einem der MOSFETs Q1 oder Q2 jedoch kein Strom.

Wird eine der Versorgungsleitungen Ph oder N im Falle einer positiven Kondensatorspannung am X-Kondensator CX getrennt, wird der Kondensator C1 über die Diode D4 und den Widerstand R1 geladen. Die Spannung an einem ersten Knoten 4a steigt daher über eine Einschaltspannung des n-Kanal MOSFET Q1 an. Über den Drainanschluss des MOSFET Q1, den Entladewiderstand RX und die Körperdiode des MOSFET Q2 wird der X-Kondensator CX entladen. Der Entladewiderstand RX ist wiederum so dimensioniert, dass er den X-Kondensator CX innerhalb einer verbleibenden Zeit, beispielsweise innerhalb von nach der Erkennung noch verbleibenden Zeit von 700 ms bis zu einer vollen Sekunde, den Kondensator CX deutlich unter eine Schwelle von 37 % der Startspannung entlädt. Beispielsweise weist er einen Gesamtwiderstandswert von 250 kΩ auf.

Eine zwischen den Drainanschluss und Gateanschluss des MOSFET Q1 geschaltete Diode D1 verhindert ein weiteres Aufladen des Tiefpasskondensators C1 und des Gateanschlusses des MOSFET Q1 deutlich über die positive Einschaltschwelle des MOSFET Q1 hinaus. Dies ermöglicht den Einsatz eines Niederspannungskondensators als Kondensator C1 und verhindert eine Zerstörung des MOSFET Q1. Gegebenenfalls kann auch ein Elektrolytkondensator als Kondensatoren C1 verwendet werden, sofern er eine geringfügige Verpolung durch die Diode D2 bei einer negativen Halbwelle der Versorgungsspannung toleriert.

Im Fall einer negativen Kondensatorspannung im Moment der Netztrennung schaltet der n-Kanal-MOSFET Q2 ein, weil in diesem Fall an einem Knoten 4b eine positive Spannung bezogen auf den Phasenleiter Ph anliegt. Über den Drainanschluss des MOSFET Q2, den Entladewiderstand RX und die rückwärts leitende Körperdiode des MOSFET Q1 wird der X-Kondensator CX entladen. Dabei verhindert die Diode D3 ein weiteres Aufladen des Kondensators C1 deutlich über die Einschaltschwelle des MOSFET Q2 hinaus. Auch der Kondensator C2 kann als gepolter Niederspannungs-Elektrolytkondensator ausgestaltet sein, sofern er die geringfügige Verpolung durch die Diode D4 bei einer positiven Halbwelle der Netzversorgungsspannung toleriert.

Auch die Schaltung gemäß dem zweiten Ausführungsbeispiel kann weiter verbessert werden, um eine Schutzwirkung auch beim Versagen einzelner Komponenten zu erzielen. Insbesondere können die Dioden D2 und D4 als Zenerdioden mit einer Zenerspannung von beispielsweise 18 V ausgebildet werden. Wird eine der Dioden D1 oder D3 zerstört, so dass die Verbindung zwischen dem Gate- und dem Drainanschluss des MOSFET Q1 beziehungsweise Q2 unterbrochen wird, verhindern die Zenerdioden somit eine Überladung der Kondensatoren C1 beziehungsweise C2.

Alternativ können die Dioden D1 beziehungsweise D3 durch jeweils zwei parallele Dioden D1a und D1b beziehungsweise D3a und D3b ersetzt werden, wobei in diesem Fall, wie oben beschrieben, kein Leckstrom fließt.

Des Weiteren können die Kondensatoren C1 und C2 jeweils durch eine Reihenschaltung aus Teilkondensatoren C1a und C1b beziehungsweise C2a und C2b aufgeteilt werden. Bei Kurzschluss eines Kondensators funktioniert die Schaltung weiterhin mit einer geringfügig veränderten Zeitkonstante.

Die Verbesserung der Wirkleistung des Netzfilters 1 entspricht der bezüglich der ersten Ausgestaltung beschriebenen Verbesserung. Allerdings kann die Schaltung gemäß dem zweiten Ausführungsbeispiel kostengünstiger verwirklicht werden, da hier nur verhältnismäßig preisgünstige n-Kanal-MOSFETs Q1 und Q2 benötigt werden.

Figur 4 zeigt die Verwendung eines erfindungsgemäßen Netzfilters 1 in einem Netzteil 5 eines elektronischen Gerätes. Hinter dem Netzfilter 5 ist ein Hauptwandler 6 sowie ein Hilfswandler 7 angeordnet. Der Hauptwandler 6 und der Hilfswandler 7 umfassen jeweils einen Schaltwandler zur Erzeugung einer Betriebsspannung Vₘₐᵢₙ beziehungsweise einer Hilfsspannung Vₐᵤₓ zum Betrieb des elektronischen Gerätes.

Das Netzfilter 1 ist so dimensioniert, dass er die von dem leistungsstarken Hauptwandler 6 mit einer Schaltleistung von beispielsweise 200 W gemäß den geltenden Vorschriften für das Stromversorgungsnetzwerk unterdrücken kann. Auch der Hilfswandler 7, der eine deutlich geringere Leistung von beispielsweise 1 bis 5 W aufweist, kann über den verhältnismäßig groß dimensionierten Netzfilter betrieben werden, ohne dass es hierzu zu einer nennenswerten Verlustleistung im Standby-Betrieb des elektronischen Gerätes kommt.

### Bezugszeichenliste

- 1: Netzfilter
- 2: Detektorschaltung
- 3: Entladeschaltung
- 4: Knoten
- 5: Netzteil
- 6: Hauptwandler
- 7: Hilfswandler

- CX: X-Kondensator
- RX: Entladewiderstand
- C1: Kondensator
- R1: Widerstand
- D1 bis D4: Diode
- Q1, Q2: MOSFET
- Ph: Phasenleiter
- N: Neutralleiter

- Vₘₐᵢₙ: Betriebsspannung
- Vₐᵤₓ: Hilfsspannung

## Patentansprüche

1. Netzfilter (1) mit wenigstens einem zwischen zwei Versorgungsleitungen (Ph, N) geschalteten X-Kondensator (CX) und wenigstens einem Entladewiderstand (RX) zum Entladen des X-Kondensators (CX),
**dadurch gekennzeichnet, dass**
der Entladewiderstand (RX) in Reihe mit wenigstens einem Schaltelement (Q1, Q2) angeordnet ist und das Netzfilter (1) wenigstens eine Detektorschaltung (2) zum Erkennen einer Netztrennung umfasst, die dazu eingerichtet ist, beim Erkennen einer Netztrennung das Schaltelement (Q1, Q2) zum Entladen des X-Kondensators (CX) über den Entladewiderstand (RX) zu schließen.

2. Netzfilter (1) nach Anspruch 1,
**dadurch gekennzeichnet, dass**
die Detektorschaltung (2) im Wesentlichen ein Tiefpassfilter zur Erkennung einer Wechselspannung eines Stromversorgungsnetzwerkes umfasst.

3. Netzfilter (1) nach Anspruch 2,
**dadurch gekennzeichnet, dass**
das Tiefpassfilter einen Spannungsteiler mit wenigstens einem Widerstand (R1) und wenigstens einem mit dem Widerstand (R1) in Reihe geschalteten Kondensator (C1) umfasst, wobei ein Spannungspotential zwischen dem Widerstand (R1) und dem Kondensator (C1) beim Anliegen der Wechselspannung des Stromversorgungsnetzwerkes an den zwei Versorgungsleitungen (Ph, N) unterhalb eines vorbestimmten Spannungspotentials bleibt und beim Trennen des Netzfilters (1) von dem Stromversorgungsnetz über das vorbestimmte Spannungspotential ansteigt.

4. Netzfilter (1) nach Anspruch 3,
**dadurch gekennzeichnet, dass**
ein Ansteigen der Spannung an dem Kondensator (C1) durch wenigstens ein Halbleiterelement, insbesondere eine Diode (D1, D3) begrenzt wird.

5. Netzfilter (1) nach einem der Ansprüche 1 bis 4,
**dadurch gekennzeichnet, dass**
das wenigstens eine Schaltelement (Q1, Q2) als Halbleiterschaltelement mit mindestens einem Steuereingang, insbesondere als MOSFET, ausgebildet ist, wobei die Detektorschaltung (2) mit dem Steuereingang des Halbleiterschaltelements verbunden ist.

6. Netzfilter (1) nach einem der Ansprüche 1 bis 5,
**dadurch gekennzeichnet, dass**
das Netzfilter (1) ein erstes Schaltelement (Q1) und ein zweites Schaltelement (Q2) umfasst, wobei die Detektorschaltung (2) dazu eingerichtet ist, beim Erkennen einer Netztrennung im Verlauf einer positiven Halbwelle einer Wechselspannung das erste Schaltelement (Q1) und beim Erkennen einer Netztrennung im Verlauf einer negativen Halbwelle einer Wechselspannung das zweite Schaltelement (Q2) zu schließen.

7. Netzfilter (1) nach Anspruch 6,
**dadurch gekennzeichnet, dass**
das erste und das zweite Schaltelement (Q1, Q2) parallel zueinander und jeweils in Reihe mit einer Diode (D2, D4) angeordnet sind.

8. Netzfilter (1) nach Anspruch 6,
**dadurch gekennzeichnet, dass**
das erste Schaltelement (Q1), der Entladewiderstand (RX) und das zweite Schaltelement (Q2) in Reihe angeordnet sind, wobei das erste Schaltelement (Q1) in erster Richtung eines Entladestroms selbstleitend ist und das zweite Schaltelement in zweiter Richtung des Entladestroms selbstleitend ist.

9. Verwendung eines Netzfilters (1) gemäß einem der Ansprüche 1 bis 8 in einem Netzteil (5) zur Versorgung eines elektronischen Gerätes mit wenigstens einem ersten Schaltwandler (6).

10. Verwendung eines Netzfilters (1) nach Anspruch 9,
**dadurch gekennzeichnet, dass**
das Netzteil (5) wenigstens einen ersten Schaltwandler (6) zur Versorgung des elektronischen Gerätes in einem eingeschalteten Zustand und einen zweiten Schaltwandler (7) zur Versorgung des elektronischen Gerätes in einem Bereitschaftszustand umfasst, wobei der erste und der zweite Schaltwandler (6, 7) gemeinsam an das Netzfilter (1) angeschlossen sind.
